# EUROPEAN PATENT SPECIFICATION

(11) **EP 4 370 415 B1**
(45) Date of publication and mention of the grant of the patent: **19.03.2025**
(21) Application number: 22744644.0
(22) Date of filing: 11.07.2022
(51) Int. Cl.: B63B 75/00, F03D 13/10, B63B 35/44, B63B 1/12

(54) **A FLOATING OFFSHORE SUPPORT STRUCTURE, ESPECIALLY FOR AN OFFSHORE WIND TURBINE, ITS ASSEMBLY METHOD AND USE AS WELL AS A PRECURSOR FRAME STRUCTURE**
SCHWIMMENDE OFFSHORE-STÜTZSTRUKTUR, INSBESONDERE FÜR EINE OFFSHORE-WINDTURBINE, MONTAGEVERFAHREN DAFÜR UND VERWENDUNG SOWIE VORLÄUFERRAHMENSTRUKTUR
STRUCTURE DE SUPPORT FLOTTANTE EN MER, EN PARTICULIER POUR UNE ÉOLIENNE EN MER, SON PROCÉDÉ D'ASSEMBLAGE ET D'UTILISATION AINSI QU'UNE STRUCTURE DE CADRE PRÉCURSEUR

(30) Priority: 12.07.2021 DK PA202170377
(43) Date of publication of application: 22.05.2024
(73) Proprietor: Stiesdal Offshore A/S, 7323 Give (DK)
(72) Inventor: STIESDAL, Henrik, 5000 Odense (DK)
(74) Representative: Patrade A/S
(86) International application number: PCT/DK2022/050157
(87) International publication number: WO 2023/284926

(56) References cited:
- EP-B1- 2 836 708
- DE-A1- 102019 103 070
- KR-A- 20200 004 297
- US-A1- 2015 071 711
- US-A1- 2015 329 180
- US-B2- 11 014 637

## Description

### FIELD OF THE INVENTION

The present invention relates to a floating offshore support structure, especially for an offshore wind turbine, its assembly method and use as well as a and a precursor frame structure.

More specific the invention relates to a floating offshore support structure, the support structure comprising a plurality of interconnected tubes forming a rigid frame with vertices arranged as a polygon in a horizontal plane, wherein a buoyancy module is mounted to the frame at each of the vertices.

More specific the method relates to assembling a floating offshore support structure, wherein the support structure comprising a plurality of interconnected tubes forming a rigid frame with vertices arranged as a polygon in a horizontal plane, and wherein the method comprises mounting a buoyancy module to the frame at each of the vertices.

### BACKGROUND OF THE INVENTION

Some types of support structures for offshore wind turbines comprise a monopile or multiple columns that are inserted into the sand of a seabed. A typical connection between the monopile and the tower of the wind turbine or between the multiple seabed-imbedded columns and a support frame for the tower comprises a grouted connection between vertically arranged coaxial tubular members, where shear keys are used for providing long-term mechanical stability after hardening of the grout. The frames are often welded structures with multiple tubes arranged as a grid, which are assembled and welded on-shore and then transported to the offshore location.

As an alternative for seabed-grounded offshore wind turbines, floating support structures are provided which often comprise a largely tetrahedral frame where buoyancy modules are provided at the three nodes, and the wind turbine tower is placed on top of a central support column. Examples are disclosed in WO2017/157399 by Stiesdal. Also, in this case, tetrahedral frames are assembled and welded on-shore and then transported to the offshore location.

The assembly of the final floating support structure with the buoyancy tanks, however, is challenging, as the tanks are large and add to the size, weight, and complexity. It is therefore desired to find useful methods for such assembly.

CN212354345U describes an assembled UHPC pipe-box combination floating structure, including three kinds of prefabricated component of UHPC pipe, UHPC box and UHPC sleeve, form through grafting, welding, gluing. On the basis of the assembled UHPC pipe-box, an ocean operation platform, an ocean net cage, a shoal floating bridge, an underwater sightseeing platform, an ocean leisure platform and the like can be further built.

US 2015/329180 A1 describes a floating offshore support structure which comprises a plurality of interconnected tubes forming a rigid frame with vertices arranged as a polygon in a horizontal plane. The structure comprises a floating body element being mounted to the frame at each of the vertices. There is no disclosure of a sleeve cooperating with a connection member for mounting of the floating body element to the frame.

### SUMMARY/DESCRIPTION OF THE INVENTION

It is an objective to provide an improvement in the art. In particular, it is an objective to provide an alternative and improved construction and assembly method for a floating offshore support structure, in particular for a wind turbine. These and other objectives are solved by a floating offshore support structure, its assembly method and use as well as a precursor frame structure, as explained in the following.

The floating offshore structure according to the invention is peculiar in that each of the vertices of the frame is provided with a tubular sleeve segment having inserted therein a tubular connection member extending through the sleeve segment, wherein the tubular connection member is secured to the sleeve segment by a portion of pourable but hardened casting material in a void between the tubular sleeve segment and the tubular connection member, wherein a buoyancy module is secured to each of the connection members.

The method according to the invention is peculiar in that he method comprises providing each of the vertices of the frame with a sleeve segment and inserting a connection member through the sleeve segment and securing the connection member to the sleeve segment by filling a portion of pourable casting material, optionally grout, into a void between the sleeve segment and the connection member and hardening the portion and securing a buoyancy module to each of the connection members.

In contrast to fastening buoyancy modules to a support frame by welding or bolting, which is traditionally used in this technical field, the attachment provided by the present invention is based on casted, especially grouted, connections, which eases assembly and results in long-lasting connections even under harsh offshore conditions. The casting method for attaching buoyancy modules to an offshore frame, especially with fine grout, between horizontally aligned coaxial tubular members at vertices of a polygonal frame structure, is a deviation from traditional fastening methods in this field, despite grouted connections being known in general for vertically oriented offshore structure.

A specific advantage achieved by the invention is the reduction of the requirements for frequent inspection as compared to all-steel connections, such as the mentioned bolted and welded solutions. The advantages of the present method are particularly relevant in relation to floating offshore wind turbines in areas with large sea depths.

The floating offshore support structure comprises a plurality of interconnected tubes forming a rigid frame with vertices arranged as a polygon in a horizontal plane, for example a triangle with three vertices. After having produced a precursor frame structure, buoyancy modules are attached to the frame at each of the vertices.

As an example, a precursor frame structure may comprise a rigid frame with a plurality of rigidly interconnected tubes forming a tetrahedral structure with three vertices arranged as a triangle in a horizontal plane and a with a support member as part of the tetrahedral structure and configured for supporting a tower of the wind turbine.

Each of the vertices of the frame are provided with a sleeve segment preferably a tubular sleeve segment into which a connection member, preferably a tubular connection member is inserted. The connection member is secured to the sleeve segment by filling a portion of pourable casting material into a void between the sleeve segment and the connection member, after which the material portion is hardened. Once, hardened, the connection member is rigidly fixed to the sleeve segment. Each of connection members at the vertices is then ready for attachment of a buoyancy module.

Potential casting materials are cement-based casting materials, such as grout with very fine sand or other filler material, but typically without stones. Un-sanded grout is a good candidate for the purpose. An alternative casting material is long-term weather-resistant hardening polymer.

Advantageously, in order to provide a rigid mechanical connection between the buoyancy module and the connection member, the sleeve segment has an inner wall provided with shear keys, and/or the connection member has an outer wall provided with other shear keys, and the casting material is provided in the void between the shear keys and the other shear keys for securing the sleeve and the connection member by the hardened casting material against movement relatively to each other. Shear keys are in particularly useful when the casting material is shrinking during hardening.

In practical embodiments, the connection member is longer than the sleeve segment and has a first free part extending a distance out of a first end of the sleeve segment to which the buoyancy module is attached by taking up the free part of the connection member in a further sleeve segment that is attached to the buoyancy module. Similarly, to the securing of the connection member to the sleeve segment of the frame, the tubular sleeve segment is secured to the free part of the connection member by filling a further portion of the pourable casting material into void therein between, which is then hardened.

In the case that the buoyancy module comprises multiple buoyancy members, the connection member comprises a first free part and a second free part that extend a distance out of one of two opposite ends of the sleeve segment. In this case a first buoyancy member, which has attached thereto a first further sleeve segment, is attached to the first free part by taking up the first free part in the first further sleeve segment. Similarly, a second buoyancy member, which has attached thereto a second further sleeve segment, is attached to the second free part by taking up the second free part in the second further sleeve segment. Further portions of pourable casting material are filled into the voids and hardened between the further sleeve segments and the free parts.

If each buoyancy module has more than two buoyancy members, it is also possible to attached more than one buoyancy member at each of the free parts of the connection member.

Advantageously, in order to provide a rigid mechanical connection between the buoyancy members and the connection member, each sleeve segment has an inner wall provided with shear keys, and each free part to which a sleeve segment is mounted has an outer wall provided with other shear keys, and the casting material is provided between the shear keys and the other shear keys for securing each sleeve segment and the connection member by the hardened casting material against movement relatively to each other.

In case that the casting material has a relatively low viscosity, it is an advantage to seal the void between the connection member and the sleeve segment with a seal at either end of the sleeve segment for preventing the casting material from escaping the void during the filling. This is especially useful when the coaxial arrangement has a horizontal longitudinal axis. Similarly, seals may be used for securing proper filling of the casting material into the other voids between the connection member and the further segments.

For example, the seal is an inflatable torus, which is arranged around the connection member and inflated prior to the filling of the casting material into the respective void. The inflation of a torus around the connection member and inside the sleeve segment assists the centration and coaxial alignment of the connection member inside the segment, as well as coaxial alignment of the further segments with the connection member when the buoyancy module is attached to the precursor frame structure.

For offshore wind turbines, triangular arrangements of buoyancy modules are often used. A useful precursor frame structure comprises a rigid frame with a plurality of rigidly interconnected tubes forming a tetrahedral structure with three vertices arranged as a triangle in a horizontal plane and a with a support member as part of the tetrahedral structure and configured for supporting a tower of the wind turbine. Each of the vertices comprises a sleeve segment and a connection member extending through the sleeve segment. As described in more detail above, the connection member is secured to the sleeve segment by a pourable but hardened casting material in a void between the tubular sleeve segment and the connection member. The connection member is coaxially aligned with the sleeve segment in a horizontal plane. As the connection member is longer than the sleeve segment, it has a free part extending a distance out of an end of the sleeve segment, typically both ends of the sleeve segment. Each free part is configured for securing a buoyancy module. However, for ease of transport and storage, the vertices of the precursor frame structure are still free from buoyancy modules, until the precursor is prepared for leaving to be transported to the offshore site. At that stage, the free parts of the three connection members would get buoyancy module attached, as already described above.

For non-triangular polygonal arrangements of the vertices, more than three buoyancy modules are provided and one of these correspondingly attached to each one of the more than three vertices.

For example, the buoyancy members are buoyancy columns.

Typical diameters for the connection member are in the range of 1-10 meters, optionally 2-6 meters.

Typically, the segments have a diameter 5-20% larger than the diameter of the connection member in order to provide a sufficiently large void for creating strength of the casted connection, especially when using shear keys.

For example, the floating support structure comprises a support column configured to support a load, such as a wind turbine, and from which a plurality, for example three, braces extend radially to the vertices of the polygonal frame.

### BRIEF DESCRIPTION OF DRAWINGS

Embodiments and further details of the invention are described in the following with reference to the figure, wherein:
- FIG. 1: shows a floating support structure comprising a number of vertices,
- FIG. 2A: shows a view of the structure of FIG. 1 wherein a cross sectional cut has been made through the buoyancy module;
- FIG. 2B: shows the cross section in greater detail;
- FIG. 3: shows a closeup of a cross section through a connection at a vertex of the precursor frame structure;
- FIG. 4: shows a closeup of a section through a connection at a vertex after attachment of the buoyancy members;
- FIG. 5: illustrates a floating support structure supporting a wind turbine;
- FIG. 6: illustrates shear keys in the connection; and
- FIG. 7: illustrates a seal.

### DETAILED DESCRIPTION OF THE INVENTION

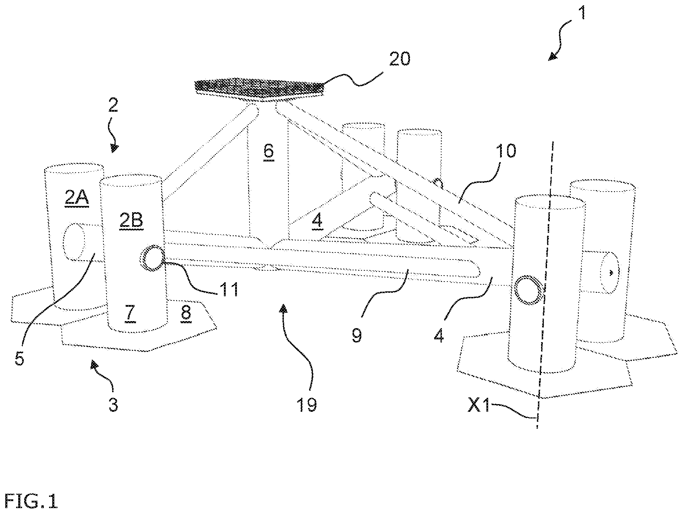

Figure 1 shows an exemplary embodiment of a floating support structure 1, typically for offshore use. The support structure 1 comprises three buoyancy modules 2, one module 2 in each one of three corner nodes 3 of a frame 19. The frame 19 is exemplified as having three corner nodes 3. Alternatively, the frame 19 has more than three nodes 3 in a polygonal arrangement. The frame 19 is typically made of hollow steel tubes 4, 6, 9 that assist the buoyancy modules 2 in increasing the total buoyancy of the support structure 1.

Each buoyancy module 2 is exemplified as comprising a pair of two buoyancy members 2A, 2B. Alternatively, each module 2 comprises only one or more than two buoyancy members. The buoyancy members 2A, 2B are typically air-filled buoyancy tanks. In the following, these are exemplified as cylindrical columns, but they may have alternative shapes.

The frame 19 comprises three main braces 4, each one of the main braces 4 extending from a support element 6, exemplified as a support column, to only one of the nodes 3. An end 5 of each of the main braces 4 is fastened to the buoyancy module 2 by a connection 11. In the present embodiment the two buoyancy members 2A, 2B are arranged symmetrically on either side of the corresponding end 5 of the main brace 4. The connection 11 extends horizontally through both buoyancy members 2A, 2B and through the end 5 of one of the main braces 4.

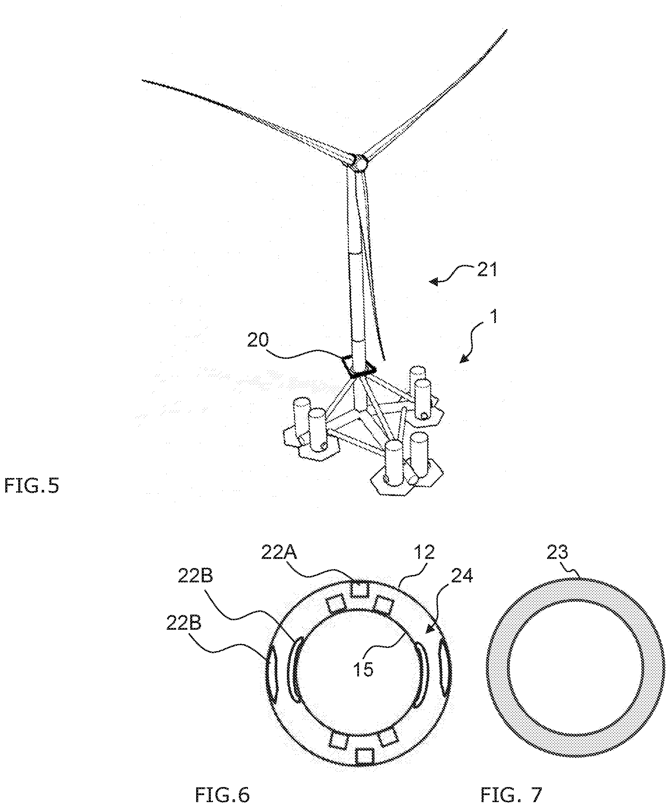

The support structure 1 is useful for supporting an offshore wind turbine, as illustrated in FIG. 5, in which case the support element 6 is supporting the tower of the wind turbine 21. In the exemplified support structure 1 of FIG. 1, a platform 20 is shown, which could have a different size, and which could also be used in the case that a wind turbine 21 is supported by the structure 1, as illustrated in FIG. 5

The support element 6 is potentially centered between the buoyancy modules 2. However, this is not necessary, and the example in FIG. 1 shows a de-centered support element 6.

At its lower end 7, each buoyancy member 2A, 2B, exemplified a buoyancy column, is provided with a dampening plate 8, which extends laterally relatively to a longitudinal axis X1 through the buoyancy member 2A, 2B.

The frame 19 further comprises a number of support braces 9, 10 for increased rigidity between the support element 6 and the buoyancy modules 2. Illustrated is a tetrahedral frame structure. As the support column 6 is not central, the formed tetrahedron is not a regular tetrahedron.

The connection 11 that connects the buoyancy members 2A, 2B with one of the main braces 4 is tubular and explained in more detail in the following.

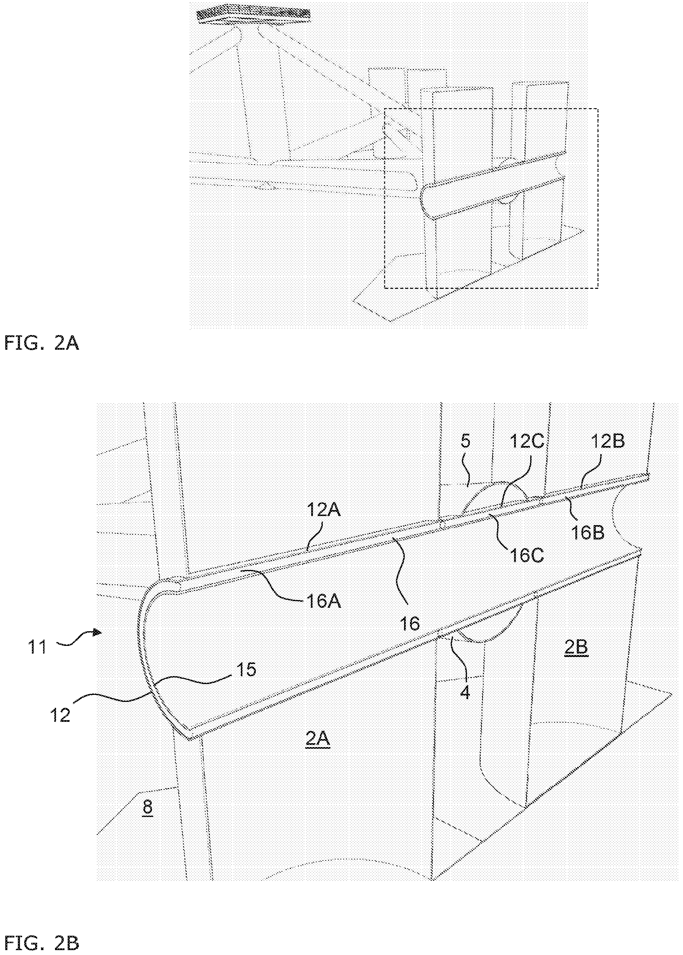

FIG. 2A shows the floating support structure of FIG. 1, wherein a cross sectional cut has been made vertically through the connection 11 and the buoyancy members 2A, 2B for illustrating the internal structure of the connection 11. The part indicated in the stippled rectangle is shown enlarged in FIG. 2B.

The connection 11 comprises a segmented cylindrical tubular sleeve 12 with three sleeve segments, namely a first sleeve segment 12A that is fastened, typically welded, to the first buoyancy column 2A, a second sleeve segment 12B that is fastened to the second buoyancy member 2B, and a third central sleeve segment 12C that is fastened to the end 5 of the corresponding main brace 4. A connection member, here shown as a cylindrical connection member 15 extends through all three axially aligned sleeve segments 12A, 12B, 12C. As the outer diameter of the cylindrical connection member 15 is smaller than the inner diameter of the tubular sleeve 12, an interspace is formed which is filled with a grout material 16. Three portions 16A, 16B, 16C of the grout material 16 are provided, namely one portion for each of the segments 12A, 12B, 12C.

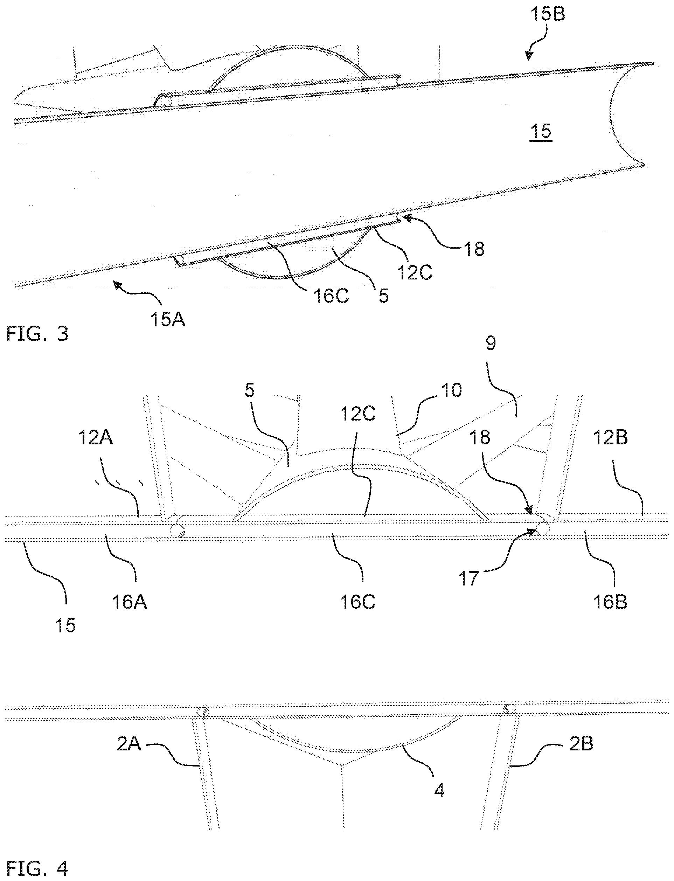

FIG. 3 illustrates a step of the assembly of the support structure 1. The end 5 of the main brace 4 has been provided with its sleeve segment 12C, and the cylindrical connection member 15 has been fastened inside the sleeve segment 12C by the corresponding portion 16C of the casting material, especially grout material 16. As the connection member 15 is longer than the sleeve segment 12C, free parts 15A, 15B extend outside the opposite ends 18 of the sleeve segment 12C.

The grout material 16 is potentially provided with a relatively low viscosity and without sand or stones. In order for it to be filled into the interspace between the sleeve segment 12C and the connection member 15, seals, of which an example is illustrated in FIG. 7, are arranged around the connection member 15 to fill the interspace in the void at the ends 18 of the sleeve segment 12C. For example, such seals are inflatable torus-shaped tubes, which are comparable in principle with inflatable tire tubes, only much larger, for example in the range of 2-6 meters in diameter.

In the situation illustrated in FIG. 3, the sleeve segment 12C and the connection member 15 are coaxially aligned in a horizontal direction. At this stage of the construction, the unfinished support structure may be transported as a precursor to the final assembly location, where the buoyancy modules 2 are fastened to the free parts 15A, 15B of the connection member 15.

In FIG. 4, the space 17 of such seal is seen between adjacent portions 16B, 16C of the grout material 16. A toroidal seal 23 that is useful at the ends 18 in such space 17 is illustrated in FIG. 7.

As the cylindrical connection member 15 is secured to the end 5 of the main brace 4, the assembly with the buoyancy members 2A, 2B is simplified. These are pushed with their further sleeve segments 12A, 12B onto the first and second end parts 15A, 15B of the already fixed connection member 15 from either end. After positioning and adjusting the orientation of the buoyancy members 2A, 2B relatively to the main brace 4 with the third segment 12C at its end 5, the corresponding portions 16A, 16B of the grout material are filled into the voids between the connection member and the respective segments 12A, 12B.Alternatively the first buoyancy member 2A is positioned and adjusted at the first end 15A of the connection member where after grout is filled into the void between the first further sleeve segment 12A and the connection member 15 and hardened to secure the first buoyancy member 2A to the connection member 15, where after the second buoyancy member 12B is attached in similar steps.

The seals that were provided in the space 17 is typically left, and corresponding seals are provided at the opposite ends of the sleeve 12 when the casting material, especially grout material, is pumped into the void between the corresponding further segment 12B, 12C and the connection member 15. After hardening, all three segments 12A, 12B, 12C are rigidly secured to the connection member 15.

Typically, the cylindrical connection member 15 is a hollow tube, advantageously steel tube. If the ends of the hollow cylindrical connection member 15 are tightened, the inner void is providing additional buoyancy.

Typically, the grout material 16 itself does not provide sufficient rotational and axial stability between the sleeve 12 and the connection member 15. However, by using shear keys, which are provided on the outer side of the connection member 15 and to the inner surface of the segments 12A, 12B, 12C of the sleeve 12, a high degree of stability is achieved. This is illustrated in FIG. 6, which is a simplified cross-sectional view to illustrate the principle. For example, first shear keys 22A that extend partially or entirely around the connection member 15 and along the inner side of the sleeve 12 secures the connection against axial displacement off the segments 12A, 12B, 12C of the sleeve 12 relatively to the connection member 15. Second shear keys 22B that extend in the axial direction of the connection member 15 on the outer side of the connection member 15 and on the inner side of the sleeve 12 secure the connection 11 against rotational forces. Typically, shear keys are metal profiles, bent or straight, that are welded to the steel surface of the corresponding component and optionally forma shear keys grid.

FIG. 7 illustrates a seal 23 that would fit into the void 24 between the connection member 15 and the sleeve 12, in particular at the ends 18 of the sleeve segment 12C in the space 17 as illustrated in FIG. 17.

## Claims

1. A method of assembling a floating offshore support structure (1), wherein the support structure (1) comprising a plurality of interconnected tubes (4, 6, 9, 10) forming a rigid frame (19) with vertices (3) arranged as a polygon in a horizontal plane, and wherein the method comprises mounting a buoyancy module (2) to the frame (19) at each of the vertices (3), **characterised in that** the method comprises providing each of the vertices (3) of the frame (19) with a sleeve segment (12C) and inserting a connection member (15) through the sleeve segment (12C) and securing the connection member (15) to the sleeve segment (12C) by filling a portion (16C) of pourable casting material (16), optionally grout, into a void (24) between the sleeve segment (12C) and the connection member (15) and hardening the portion (16C) and securing a buoyancy module (2) to each of the connection members (15).

2. Method according to claim 1, wherein the connection member (15) is longer than the sleeve segment (12C) and has a first free part (15A) extending a distance out of a first end (18) of the sleeve segment (12C); wherein the method comprises, after securing the connection member (15) to the sleeve segment (12C) by hardening the portion (16C), attaching the buoyancy module (2) to the first free part (15A) by taking up the first free part (15A) of the connection member (15) in a further sleeve segment (12A) that is attached to the buoyancy module (2), filling a further portion (16A) of pourable casting material (16) into a further void between the further sleeve segment (12A) and the first free part of the connection member (15) and hardening the further portion (16A) for securing the buoyancy module (2) to the free part (15A).

3. Method according to claim 2, wherein the connection member (15) comprises a second free part (15B), extending a distance out of a second end (18) of the sleeve segment (12C); wherein the buoyancy module (2) comprises a second buoyancy member (2B) which has attached thereto a second further sleeve (12B); wherein the method comprises, after securing the connection member (15) to the sleeve segment (12C) by hardening the portion (16C) and attaching the first buoyancy members (2A) to the first free part (15A) by taking up the first free part (15A) in the first further sleeve segment (12A) attaching the second buoyancy member (2B) to the second free part (15B) by taking up the second free part (15B) in the second further sleeve segment (12B), filling further portions (16A, 16B) of pourable casting material (16) into voids (24) between the further sleeve segments (12A, 12B) and the free parts (15A, 15B) and hardening the further portion (16A, 16B).

4. Method according to any preceding claim, wherein the sleeve segment (12C) has an inner wall provided with shear keys (22A, 22B), and the connection member (15) has an outer wall provided with other shear keys (22A, 22B), and wherein the casting material (16) is provided in the void (24) between the shear keys and the other shear keys (22A, 22B) for securing the sleeve (12) and the connection member (15) by the hardened casting material (16) against movement relatively to each other.

5. Method according to any of the claims 2 - 4, wherein one or more of sleeve segments (12C), first further sleeve segment (12A) and/or second further sleeve segment (12B) has an inner wall provided with shear keys (22A, 22B), and the connection member (15) has an outer wall provided with other shear keys (22A, 22B), and wherein the casting material (16) is provided between the shear keys and the other shear keys (22A, 22B) for securing any of the sleeve segment (12A, 12B, 12C) and the connection member (15) by the hardened casting material (16) against movement relatively to each other.

6. Method according to any of the preceding claims, wherein the method comprises sealing the void (24) between the connection member (15) and the sleeve segment (12C) with a seal (23) at either end (18) of the sleeve segment (12C) for preventing the casting material (16) from escaping the void during filling.

7. Method according to any of the claims 2 - 5, wherein the method comprises sealing the void (24) between the connection member (15) and the sleeve segment (12C) with a seal (23) at either end (18) of the sleeve segment (12C) for preventing the casting material (16) from escaping the void during filling; after hardening of the casting material, maintaining the seals at both ends (18) of the sleeve segment (12C) and using at least one of the seals as sealing for the further casting material when attaching the buoyancy module (2) to the connection member (15).

8. Method according to claim 6 or 7, wherein the method comprises providing the seal (23) as an inflatable torus and arranging it around the connection member (15) at the location of sealing, and inflating the seal prior to casting for sealing around the connection member (15) and preventing the casting material from flowing out of the void (24) or voids.

9. Method according to any of the preceding claims, wherein method comprises coaxially aligning the sleeve segment (12C) and the connection member (15) in a horizontal plane.

10. A floating offshore support structure (1), the support structure (1) comprising a plurality of interconnected tubes (4, 6, 9, 10) forming a rigid frame (19) with vertices (3) arranged as a polygon in a horizontal plane, wherein a buoyancy module (2) is mounted to the frame (19) at each of the vertices (3), **characterised in that** each of the vertices (3) of the frame (19) is provided with a tubular sleeve segment (12C) having inserted therein a tubular connection member (15) extending through the sleeve segment (12C), wherein the tubular connection member (15) is secured to the sleeve segment (12C) by a portion (16C) of pourable but hardened casting material (16) in a void (24) between the tubular sleeve segment (12C) and the tubular connection member (15), wherein a buoyancy module (2) is secured to each of the connection members (15).

11. Structure according to claim 10, wherein the connection member (15) is longer than the sleeve segment (12C) and comprises a first free part (15A) and a second free part (15B), each of which is extending a distance out of one of two opposite ends (18) of the sleeve segment (12C); wherein the buoyancy module (2) comprises a first buoyancy member (2A) which has attached thereto a first further tubular sleeve (12A) and a second buoyancy member (2B) which has attached thereto a second further tubular sleeve (12B); wherein the first buoyancy members (2A) is attached to the first free part (15A) by taking up the first free part (15A) in the first further sleeve segment (12A) and the second buoyancy member (2B) is attached to the second free part (15B) by taking up the second free part (15B) in the second further sleeve segment (12B), wherein further portions (16A, 16B) of pourable but hardened casting material (16) are provided in the voids (24) between the further tubular sleeve segments (12A, 12B) and the free parts (15A, 15B); wherein each sleeve segment (12A, 12B, 12C) has an inner wall provided with shear keys (22A, 22B), and the tubular connection member (15) has an outer wall provided with other shear keys (22A, 22B), and wherein the casting material (16) is provided between the shear keys and the other shear keys (22A, 22B) for securing each sleeve segment (12A, 12B, 12C) and the tubular connection member (15) by the hardened casting material (16) against movement relatively to each other.

12. Structure according to claim 10 or 11 obtained by the method of any one of the claims 1-9.

13. An offshore wind turbine system comprising a wind turbine (21) and a floating offshore support structure (1) according to claim 10, 11, or 12.

14. A precursor frame structure for an offshore wind turbine, **characterised in that** the precursor frame structure comprising a rigid frame (19), which comprises a plurality of rigidly interconnected tubes (4, 6, 9, 10) forming a rigid tetrahedral structure with (3) vertices (3) arranged as a triangle in a horizontal plane and a with a support member (6) as part of the tetrahedral structure and configured for supporting a tower of the wind turbine (21) wherein each of the vertices (3) comprises a sleeve segment (12C) and a connection member (15) extending through the sleeve segment (12C), wherein the connection member (15) is secured to the sleeve segment (12C) by a hardened casting material (16) in a void (24) between the sleeve segment (12C) and the connection member (15); wherein the connection member (15) is coaxially aligned with the sleeve segment (12C) in a horizontal plane; wherein the connection member (15) is longer than the sleeve segment (12C) and has a free part (15A) extending a distance out of an end (18) of the sleeve segment (12C) for securing a buoyancy module (2) to the free part (15A); wherein the vertices (3) of the precursor frame structure are free from buoyancy modules (2); and wherein the free parts (15A, 15B) of the three connection members (15) are configured and dimensioned for attachment of buoyancy modules (2).

15. The precursor frame structure according to claim 14, wherein the connection member (15) has a first free part (15A) and a second free part (15B), each of which is extending a distance out of one of two opposite ends (18) of the sleeve segment (12C) for securing a buoyancy member (2A, 2B) to each of the free parts (15A, 15B).

## Patentansprüche

1. Verfahren zum Montieren einer schwimmenden Offshore-Stützstruktur (1), wobei die Stützstruktur (1) eine Vielzahl von miteinander verbundenen Rohren (4, 6, 9, 10) umfasst, die einen starren Rahmen (19) mit Stützpunkten (3) bildet, die als ein Vieleck in einer horizontalen Ebene angeordnet sind, und wobei das Verfahren Anbringen eines Auftriebsmoduls (2) an den Rahmen (19) an jedem der Stützpunkte (3) umfasst, **dadurch gekennzeichnet, dass** das Verfahren Versehen jedes der Stützpunkte (3) des Rahmens (19) mit einem Hülsensegment (12C) und Einsetzen eines Verbindungselements (15) durch das Hülsensegment (12C) und Sichern des Verbindungselements (15) an dem Hülsensegment (12C) durch Füllen eines Abschnitts (16C) eines gießbaren Gießmaterials (16), optional Fugenmaterial, in einen Hohlraum (24) zwischen dem Hülsensegment (12C) und dem Verbindungselement (15) und Aushärten des Abschnitts (16C) und Sichern eines Auftriebsmodul (2) an jedem der Verbindungselemente (15) umfasst.

2. Verfahren nach Anspruch 1, wobei das Verbindungselement (15) länger als das Hülsensegment (12C) ist und einen ersten freien Teil (15A) aufweist, der sich ein Stück aus einem ersten Ende (18) des Hülsensegments (12C) erstreckt; wobei das Verfahren nach dem Sichern des Verbindungselements (15) an dem Hülsensegment (12C) durch Aushärten des Abschnitts (16C) Befestigen des Auftriebsmoduls (2) an dem ersten freien Teil (15A) durch Aufnehmen des ersten freien Teils (15A) des Verbindungselements (15) in einem weiteren Hülsensegment (12A), das an dem Auftriebsmodul (2) befestigt ist, Füllen eines weiteren Abschnitts (16A) des gießbaren Gießmaterials (16) in einen weiteren Hohlraum zwischen dem weiteren Hülsensegment (12A) und dem ersten freien Teil des Verbindungselements (15) und Aushärten des weiteren Abschnitts (16A) zum Sichern des Auftriebsmoduls (2) an dem freien Teil (15A) umfasst.

3. Verfahren nach Anspruch 2, wobei das Verbindungselement (15) einen zweiten freien Teil (15B) umfasst, der sich ein Stück aus einem zweiten Ende (18) des Hülsensegments (12C) erstreckt; wobei das Auftriebsmodul (2) ein zweites Auftriebselement (2B) umfasst, das daran befestigt eine zweite weitere Hülse (12B) aufweist; wobei das Verfahren nach dem Sichern des Verbindungselements (15) an dem Hülsensegment (12C) durch Aushärten des Abschnitts (16C) und Befestigen der ersten Auftriebselemente (2A) an dem ersten freien Teil (15A) durch Aufnehmen des ersten freien Teils (15A) in dem ersten weiteren Hülsensegment (12A) Befestigen des zweiten Auftriebselements (2B) an dem zweiten freien Teil (15B) durch Aufnehmen des zweiten freien Teils (15B) in dem zweiten weiteren Hülsensegment (12B) Füllen weiterer Abschnitte (16A, 16B) des gießbaren Gießmaterials (16) in Hohlräume (24) zwischen den weiteren Hülsensegmenten (12A, 12B) und den freien Teilen (15A, 15B) und Aushärten des weiteren Abschnitts (16A, 16B) umfasst.

4. Verfahren nach einem der vorhergehenden Ansprüche, wobei das Hülsensegment (12C) eine Innenwand aufweist, die mit Schubverzahnungen (22A, 22B) versehen ist, und das Verbindungselement (15) eine Außenwand aufweist, die mit anderen Schubverzahnungen (22A, 22B) versehen ist, und wobei das Gießmaterial (16) in dem Hohlraum (24) zwischen den Schubverzahnungen und den anderen Schubverzahnungen (22A, 22B) bereitgestellt ist, um die Hülse (12) und das Verbindungselement (15) durch das ausgehärtete Gießmaterial (16) gegen Bewegung relativ zueinander zu sichern.

5. Verfahren nach einem der Ansprüche 2 - 4, wobei eines oder mehrere von Hülsensegmenten (12C), erstem weiteren Hülsensegment (12A) und/oder zweitem weiteren Hülsensegment (12B) eine Innenwand aufweist, die mit Schubverzahnungen (22A, 22B) versehen ist, und wobei das Verbindungselement (15) eine Außenwand aufweist, die mit anderen Schubverzahnungen (22A, 22B) versehen ist, und wobei das Gießmaterial (16) zwischen den Schubverzahnungen und den anderen Schubverzahnungen (22A, 22B) bereitgestellt wird, um eines von dem Hülsensegment (12A, 12B, 12C) und dem Verbindungselement (15) durch das ausgehärtete Gießmaterial (16) gegen Bewegung relativ zueinander zu sichern.

6. Verfahren nach einem der vorhergehenden Ansprüche, wobei das Verfahren Abdichten des Hohlraums (24) zwischen dem Verbindungselement (15) und dem Hülsensegment (12C) mit einer Dichtung (23) an jedem Ende (18) des Hülsensegments (12C) umfasst, um zu verhindern, dass das Gießmaterial (16) während des Füllens aus dem Hohlraum austritt.

7. Verfahren nach einem der Ansprüche 2 - 5, wobei das Verfahren Abdichten des Hohlraums (24) zwischen dem Verbindungselement (15) und dem Hülsensegment (12C) mit einer Dichtung (23) an jedem Ende (18) des Hülsensegments (12C), um zu verhindern, dass das Gießmaterial (16) während des Füllens aus dem Hohlraum austritt; nach dem Aushärten des Gießmaterials, Halten der Dichtungen an beiden Enden (18) des Hülsensegments (12C) und Verwenden mindestens einer der Dichtungen als Abdichtung für das weitere Gießmaterial umfasst, wenn das Auftriebsmodul (2) an dem Verbindungselement (15) befestigt wird.

8. Verfahren nach Anspruch 6 oder 7, wobei das Verfahren Bereitstellen der Dichtung (23) als aufblasbaren Ring und Anordnen derselben um das Verbindungselement (15) an der Stelle der Abdichtung und Aufblasen der Dichtung vor dem Gießen zum Abdichten um das Verbindungselement (15) und Verhindern des Ausströmens des Gießmaterials aus dem Hohlraum (24) oder den Hohlräumen umfasst.

9. Verfahren nach einem der vorhergehenden Ansprüche, wobei das Verfahren koaxiales Ausrichten des Hülsensegments (12C) und des Verbindungselements (15) in einer horizontalen Ebene umfasst.

10. Schwimmende Offshore-Stützstruktur (1), wobei die Stützstruktur (1) eine Vielzahl von miteinander verbundenen Rohren (4, 6, 9, 10) umfasst, die einen starren Rahmen (19) mit Stützpunkten (3) bildet, die als ein Vieleck in einer horizontalen Ebene angeordnet sind, wobei an jedem der Stützpunkte (3) ein Auftriebsmodul (2) an den Rahmen (19) angebracht ist, **dadurch gekennzeichnet, dass** jeder der Stützpunkte (3) des Rahmens (19) mit einem rohrförmigen Hülsensegment (12C) versehen ist, das ein darin eingesetztes rohrförmiges Verbindungselement (15) aufweist, das sich durch das Hülsensegment (12C) erstreckt, wobei das rohrförmige Verbindungselement (15) an dem Hülsensegment (12C) durch einen Abschnitt (16C) eines gießbaren, aber ausgehärteten Gießmaterials (16) in einem Hohlraum (24) zwischen dem rohrförmigen Hülsensegment (12C) und dem rohrförmigen Verbindungselement (15) gesichert ist, wobei ein Auftriebsmodul (2) an jedem der Verbindungselemente (15) gesichert ist.

11. Struktur nach Anspruch 10, wobei das Verbindungselement (15) länger als das Hülsensegment (12C) ist und einen ersten freien Teil (15A) und einen zweiten freien Teil (15B) umfasst, von denen sich jeder ein Stück aus einem von zwei gegenüberliegenden Enden (18) des Hülsensegments (12C) erstreckt; wobei das Auftriebsmodul (2) ein erstes Auftriebselement (2A), das daran befestigt eine erste weitere rohrförmige Hülse (12A) aufweist, und ein zweites Auftriebselement (2B), das daran befestigt eine zweite weitere rohrförmige Hülse (12B) aufweist, umfasst; wobei das erste Auftriebselement (2A) durch Aufnehmen des ersten freien Teils (15A) in dem ersten weiteren Hülsensegment (12A) an dem ersten freien Teil (15A) befestigt ist und das zweite Auftriebselement (2B) durch Aufnehmen des zweiten freien Teils (15B) in dem zweiten weiteren Hülsensegment (12B) an dem zweiten freien Teil (15B) befestigt ist, wobei in den Hohlräumen (24) zwischen den weiteren rohrförmigen Hülsensegmenten (12A, 12B) und den freien Teilen (15A, 15B) weitere Abschnitte (16A, 16B) des gießbaren, aber ausgehärteten Gießmaterials (16) bereitgestellt sind; wobei jedes Hülsensegment (12A, 12B, 12C) eine Innenwand aufweist, die mit Schubverzahnungen (22A, 22B) versehen ist, und das rohrförmige Verbindungselement (15) eine Außenwand aufweist, die mit anderen Schubverzahnungen (22A, 22B) versehen ist, und wobei das Gießmaterial (16) zwischen den Schubverzahnungen und den anderen Schubverzahnungen (22A, 22B) zum Sichern jedes Hülsensegments (12A, 12B, 12C) und des rohrförmigen Verbindungselements (15) durch das ausgehärtete Gießmaterial (16) gegen Bewegung relativ zueinander bereitgestellt ist.

12. Struktur nach Anspruch 10 oder 11, die durch das Verfahren nach einem der Ansprüche 1-9 erlangt wird.

13. Offshore-Windturbinensystem, umfassend eine Windturbine (21) und eine schwimmende Offshore-Stützstruktur (1) nach Anspruch 10, 11 oder 12.

14. Vorläuferrahmenstruktur für eine Offshore-Windturbine, **dadurch gekennzeichnet, dass** die Vorläuferrahmenstruktur einen starren Rahmen (19) umfasst, der eine Vielzahl von starr miteinander verbundenen Rohren (4, 6, 9, 10) umfasst, die eine starre tetraedrische Struktur mit (3) Stützpunkten (3) bildet, die als ein Dreieck in einer horizontalen Ebene angeordnet sind, und mit einem Stützelement (6) als Teil der tetraedrischen Struktur und konfiguriert zum Stützen eines Turms der Windturbine (21), wobei jeder der Stützpunkte (3) ein Hülsensegment (12C) und ein Verbindungselement (15) umfasst, das sich durch das Hülsensegment (12C) erstreckt, wobei das Verbindungselement (15) an dem Hülsensegment (12C) durch ein ausgehärtetes Gießmaterial (16) in einem Hohlraum (24) zwischen dem Hülsensegment (12C) und dem Verbindungselement (15) gesichert ist; wobei das Verbindungselement (15) koaxial mit dem Hülsensegment (12C) in einer horizontalen Ebene ausgerichtet ist; wobei das Verbindungselement (15) länger als das Hülsensegment (12C) ist und einen freien Teil (15A) aufweist, der sich ein Stück aus einem Ende (18) des Hülsensegments (12C) erstreckt, um ein Auftriebsmodul (2) an dem freien Teil (15A) zu sichern; wobei die Stützpunkte (3) der Vorläuferrahmenstruktur frei von Auftriebsmodulen (2) sind; und wobei die freien Teile (15A, 15B) der drei Verbindungselemente (15) zur Befestigung von Auftriebsmodulen (2) konfiguriert und dimensioniert sind.

15. Vorläuferrahmenstruktur nach Anspruch 14, wobei das Verbindungselement (15) einen ersten freien Teil (15A) und einen zweiten freien Teil (15B) aufweist, von denen sich jeder ein Stück aus einem von zwei gegenüberliegenden Enden (18) des Hülsensegments (12C) erstreckt, um ein Auftriebselement (2A, 2B) an jedem der freien Teile (15A, 15B) zu sichern.

## Revendications

1. Procédé d'assemblage d'une structure de support (1) flottante en mer, dans lequel la structure de support (1) comprend une pluralité de tubes interreliés (4, 6, 9, 10) formant un cadre rigide (19) avec des sommets (3) disposés comme un polygone dans un plan horizontal, et dans lequel le procédé comprend le montage d'un module de flottabilité (2) sur le cadre (19) au niveau de chacun des sommets (3), **caractérisé en ce que** le procédé comprend la fourniture d'un segment de manchon (12C) à chacun des sommets (3) du cadre (19) et l'insertion d'un élément de liaison (15) à travers le segment de manchon (12C) et la fixation de l'élément de liaison (15) au segment de manchon (12C) en remplissant une partie (16C) d'un matériau de coulage (16) coulant, optionnellement d'un coulis, dans un vide (24) entre le segment de manchon (12C) et l'élément de liaison (15) et en durcissant la partie (16C), et la fixation d'un module de flottabilité (2) à chacun des éléments de liaison (15).

2. Procédé selon la revendication 1, dans lequel l'élément de liaison (15) est plus long que le segment de manchon (12C) et présente une première partie libre (15A) s'étendant sur une distance hors d'une première extrémité (18) du segment de manchon (12C) ; dans lequel le procédé comprend, après la fixation de l'élément de liaison (15) au segment de manchon (12C) en durcissant la partie (16C), l'attachement du module de flottabilité (2) à la première partie libre (15A) en prenant la première partie libre (15A) de l'élément de liaison (15) dans un autre segment de manchon (12A) qui est attaché au module de flottabilité (2), en remplissant une autre partie (16A) d'un matériau de coulage (16) coulant dans un autre vide entre l'autre segment de manchon (12A) et la première partie libre de l'élément de liaison (15) et en durcissant l'autre partie (16A) afin de fixer le module de flottabilité (2) à la partie libre (15A).

3. Procédé selon la revendication 2, dans lequel l'élément de liaison (15) comprend une seconde partie libre (15B), s'étendant sur une distance hors d'une seconde extrémité (18) du segment de manchon (12C) ; dans lequel le module de flottabilité (2) comprend un second élément de flottabilité (2B) auquel est attaché un second autre manchon (12B) ; dans lequel le procédé comprend, après la fixation de l'élément de liaison (15) au segment de manchon (12C) en durcissant la partie (16C) et l'attachement des premiers modules de flottabilité (2A) à la première partie libre (15A) en prenant la première partie libre (15A) dans le premier autre segment de manchon (12A), l'attachement du second module de flottabilité (2B) à la seconde partie libre (15B) en prenant la seconde partie libre (15B) dans le second autre segment de manchon (12B), en remplissant des autres parties (16A, 16B) d'un matériau de coulage (16) coulant dans des vides (24) entre les autres segments de manchon (12A, 12B) et les parties libres (15A, 15B) et en durcissant l'autre partie (16A, 16B).

4. Procédé selon l'une quelconque revendication précédente, dans lequel le segment de manchon (12C) présente une paroi interne pourvue de clés de cisaillement (22A, 22B), et l'élément de liaison (15) présente une paroi externe pourvue d'autres clés de cisaillement (22A, 22B), et dans lequel le matériau de coulage (16) est prévu dans le vide (24) entre les clés de cisaillement et les autres clés de cisaillement (22A, 22B) afin de fixer le manchon (12) et l'élément de liaison (15) par le matériau de coulage (16) durci contre un mouvement l'un par rapport à l'autre.

5. Procédé selon l'une quelconque des revendications 2 à 4, dans lequel l'un ou plusieurs parmi des segments de manchon (12C), un premier autre segment de manchon (12A) et/ou un second autre segment de manchon (12B) présente(nt) une paroi interne pourvue de clés de cisaillement (22A, 22B), et l'élément de liaison (15) présente une paroi externe pourvue d'autres clés de cisaillement (22A, 22B), et dans lequel le matériau de coulage (16) est prévu entre les clés de cisaillement et les autres clés de cisaillement (22A, 22B) afin de fixer l'un ou l'autre du segment de manchon (12A, 12B, 12C) et de l'élément de liaison (15) par le matériau de coulage (16) durci contre un mouvement l'un par rapport à l'autre.

6. Procédé selon l'une quelconque des revendications précédentes, dans lequel le procédé comprend le scellement du vide (24) entre l'élément de liaison (15) et le segment de manchon (12C) avec un joint (23) au niveau de l'une ou de l'autre extrémité (18) du segment de manchon (12C) afin d'empêcher le matériau de coulage (16) de s'échapper du vide pendant le remplissage.

7. Procédé selon l'une quelconque des revendications 2 à 5, dans lequel le procédé comprend le scellement du vide (24) entre l'élément de liaison (15) et le segment de manchon (12C) avec un joint (23) au niveau de l'une ou de l'autre extrémité (18) du segment de manchon (12C) afin d'empêcher le matériau de coulage (16) de s'échapper du vide pendant le remplissage ; après le durcissement du matériau de coulage, le maintien des joints au niveau de deux extrémités (18) du segment de manchon (12C) et l'utilisation d'au moins l'un des joints comme joint pour l'autre matériau de coulage lors de l'attachement du module de flottabilité (2) à l'élément de liaison (15).

8. Procédé selon la revendication 6 ou 7, dans lequel le procédé comprend la fourniture du joint (23) sous la forme d'un tore gonflable et sa disposition autour de l'élément de liaison (15) au niveau de l'emplacement de scellement, et le gonflement du joint avant le coulage pour le scellement autour de l'élément de liaison (15) et l'empêchement du matériau de coulage de s'écouler hors du vide (24) ou de vides.

9. Procédé selon l'une quelconque des revendications précédentes, dans lequel le procédé comprend l'alignement coaxial du segment de manchon (12C) et de l'élément de liaison (15) dans un plan horizontal.

10. Structure de support (1) flottante en mer, la structure de support (1) comprenant une pluralité de tubes interreliés (4, 6, 9, 10) formant un cadre rigide (19) avec des sommets (3) disposés comme un polygone dans un plan horizontal, dans laquelle un module de flottabilité (2) est monté sur le cadre (19) au niveau de chacun des sommets (3), **caractérisée en ce que** chacun des sommets (3) du cadre (19) est pourvu d'un segment de manchon (12C) tubulaire présentant un élément de liaison (15) tubulaire inséré dans celui-ci s'étendant à travers le segment de manchon (12C), dans laquelle l'élément de liaison (15) tubulaire est fixé au segment de manchon (12C) par une partie (16C) d'un matériau de coulage (16) coulant mais durci dans un vide (24) entre le segment de manchon (12C) tubulaire et l'élément de liaison (15) tubulaire, dans laquelle un module de flottabilité (2) est fixé à chacun des éléments de liaison (15).

11. Structure selon la revendication 10, dans laquelle l'élément de liaison (15) est plus long que le segment de manchon (12C) et comprend une première partie libre (15A) et une seconde partie libre (15B), dont chacune s'étend sur une distance hors de l'une de deux extrémités (18) opposées du segment de manchon (12C) ; dans laquelle le module de flottabilité (2) comprend un premier élément de flottabilité (2A) auquel est attaché un =- premier autre manchon (12A) tubulaire et un second élément de flottabilité (2B) auquel est attaché un second autre manchon (12B) tubulaire ; dans laquelle les premiers modules de flottabilité (2A) sont attachés à la première partie libre (15A) en prenant la première partie libre (15A) dans le premier autre segment de manchon (12A) et le second module de flottabilité (2B) est attaché à la seconde partie libre (15B) en prenant la seconde partie libre (15B) dans le second autre segment de manchon (12B), dans laquelle d'autres portions (16A, 16B) d'un matériau de coulage (16) coulant mais durci sont prévues dans les vides (24) entre les autres segments de manchon (12A, 12B) tubulaire et les parties libres (15A, 15B) ; dans laquelle chaque segment de manchon (12A, 12B, 12C) présente une paroi interne pourvue de clés de cisaillement (22A, 22B), et l'élément de liaison (15) tubulaire présente une paroi externe pourvue d'autres clés de cisaillement (22A, 22B), et dans laquelle le matériau de coulage (16) est prévu entre les clés de cisaillement et les autres clés de cisaillement (22A, 22B) afin de fixer chaque segment de manchon (12A, 12B, 12C) et l'élément de liaison (15) tubulaire par le matériau de coulage (16) durci contre un mouvement l'un par rapport à l'autre.

12. Structure selon la revendication 10 ou 11 obtenue par le procédé selon l'une quelconque des revendications 1 à 9.

13. Système d'éolienne en mer comprenant une éolienne (21) et une structure de support (1) flottante en mer selon la revendication 10, 11, ou 12.

14. Structure de cadre précurseur pour une éolienne en mer, **caractérisée en ce que** la structure de cadre précurseur comprend un cadre (19) rigide, qui comprend une pluralité de tubes interreliés (4, 6, 9, 10) de manière rigide formant une structure tétraédrique rigide avec (3) sommets (3) disposés en triangle dans un plan horizontal et un élément de support (6) faisant partie de la structure tétraédrique et configuré pour soutenir une tour de l'éolienne (21), dans laquelle chacun des sommets (3) comprend un segment de manchon (12C) et un élément de liaison (15) s'étendant à travers le segment de manchon (12C), dans laquelle l'élément de liaison (15) est fixé au segment de manchon (12C) par un matériau de coulage (16) durci dans un vide (24) entre le segment de manchon (12C) et l'élément de liaison (15) ; dans laquelle l'élément de liaison (15) est aligné coaxialement avec le segment de manchon (12C) dans un plan horizontal ; dans laquelle l'élément de liaison (15) est plus long que le segment de manchon (12C) et présente une partie libre (15A) s'étendant sur une distance hors d'une extrémité (18) du segment de manchon (12C) afin de fixer un module de flottabilité (2) à la partie libre (15A) ; dans laquelle les sommets (3) de la structure de cadre précurseur sont libres de modules de flottabilité (2) ; et dans laquelle les parties libres (15A, 15B) des trois éléments de liaison (15) sont configurées et dimensionnées pour l'attachement de modules de flottabilité (2).

15. Structure de cadre précurseur selon la revendication 14, dans laquelle l'élément de liaison (15) présente une première partie libre (15A) et une seconde partie libre (15B), dont chacune s'étend sur une distance hors de l'une de deux extrémités (18) opposées du segment de manchon (12C) afin de fixer un élément de flottabilité (2A, 2B) à chacune des parties libres (15A, 15B).
